# EUROPEAN PATENT SPECIFICATION

(11) **EP 2 546 129 B1**
(45) Date of publication and mention of the grant of the patent: **27.05.2015**
(21) Application number: 12174686.1
(22) Date of filing: 03.07.2012
(51) Int. Cl.: B62K 11/10, B62K 19/46, F02M 35/16

(54) **Two-wheeled motor vehicle**
Zweirädriges Kraftfahrzeug
Véhicule à moteur à deux roues

(30) Priority: 11.07.2011 JP 2011152890
(43) Date of publication of application: 16.01.2013
(73) Proprietor: Yamaha Hatsudoki Kabushiki Kaisha, Iwata-shi, Shizuoka 438-8501 (JP)
(72) Inventor: Kodama, Ayumu, Iwata-shi, Shizuoka 438-8501 (JP); Akao, Takuya, Iwata-shi, Shizuoka 438-8501 (JP)
(74) Representative: Grünecker Patent- und Rechtsanwälte PartG mbB

(56) References cited:
- EP-A2- 0 303 408
- JP-A- 10 297 566
- JP-A- 2004 268 840

## Description

The present invention relates to a two-wheeled motor vehicle and in particular to placement of a battery. A two-wheeled motor vehicle according to the preamble of claim 1 is known from EP 0 303 408.

WO2004/078568 describes a two-wheeled motor vehicle having an engine unit that can rock in the up-down direction relative to the vehicle body frame, in which a battery is placed in front of a storage box placed above the engine unit. According to the above, as the battery is placed in front of the storage box, the battery less likely gets dirt and water splashed by the rear wheel.

Further, the engine unit includes a crank case, a cylinder having an axis thereof remaining horizontal in a side view and placed in front of the crank case, and an air cleaner placed above the crank case. On the front surface of the air cleaner, an air inlet pipe extending toward the cylinder and an air inlet open forward are arranged side by side in the vehicle width direction. Midway the air inlet pipe, a throttle body is mounted. With this structure, dirt and water splashed by the rear wheel hardly enters the space where the air cleaner sucks air, the space being ensured in front of the air cleaner above the cylinder.

According to the above described related art, as a battery is placed in front of the storage box, the front-rear length of the storage space of the storage box results in short. This is inconvenient in storing an item, such as shoes, that is long in one direction.

Meanwhile, Japanese Patent Laid-open Publication No. 2008-201332 describes that a battery is placed inside a cover provided around the head pipe and the steering stem. According to the above, as the battery is positioned inside the cover, the battery less likely gets dirt and water splashed by the rear wheel. However, as the battery is placed in a front part of the vehicle, a lengthy harness running between the battery and the engine unit is resulted.

The present invention has been conceived in view of the above described situation, and a major object thereof is to provide a two-wheeled motor vehicle having a battery placed in a position less likely getting dirt and water, capable of increasing the front-rear length of the storage space of the storage box and reducing the length of the harness.

In order to achieve the above described object, a two-wheeled motor vehicle according to independent claim 1 is provided. Disclosed within the following is a two-wheeled motor vehicle comprising, inter alia, a vehicle body frame, a pivot shaft supported by the vehicle body frame, an engine unit capable of rocking in an up-down direction with the pivot shaft as a fulcrum, a storage box placed above the engine unit, and a battery case placed below a storage space of the storage box, for storing a battery. The engine unit includes a crank case, a cylinder placed in front of the crank case, an air cleaner placed above the crank case, and an air inlet pipe extending forward from the air cleaner to be connected to the cylinder and having a throttle body placed above the cylinder. The battery case is positioned in front of the air cleaner and beside the throttle body at least when the engine unit is positioned at a top position in rocking.

According to the present invention, a battery is placed in the space ensured in front of the air cleaner above the cylinder, the space being less likely affected by dirt and water splashed by the rear wheel. Further, as the battery case is provided below the storage space of the storage box, it is possible to increase the front-rear length of the storage space of the storage box. Still further, as the battery is placed at the middle of the vehicle body in the front-back direction, it is possible to reduce the length of the harness.
Fig. 1 is a left side view of a two-wheeled motor vehicle according to one embodiment of the present invention;
Fig. 2A is a left side view of an engine unit and a vehicle body frame with the engine unit at a normal position in swinging;
Fig. 2B is a left side view of the engine unit and the vehicle body frame with the engine unit at the top position in swinging;
Fig. 3A is a right side view of the engine unit and the vehicle body frame with the engine unit at a normal position in swinging;
Fig. 3B is a right side view of the engine unit and the vehicle body frame with the engine unit at the top position in swinging;
Fig. 4 is a plan view of the engine unit and the vehicle body frame with the engine unit at the top position in swinging;
Fig. 5 is a cross sectional view of a storage box and a battery case with the engine unit at the top position in swinging; and
Fig. 6 is a cross sectional view of the storage box and the battery case with the engine unit at the top position in swinging.

An embodiment of a two-wheeled motor vehicle according to the present invention will be described referring to the drawings.

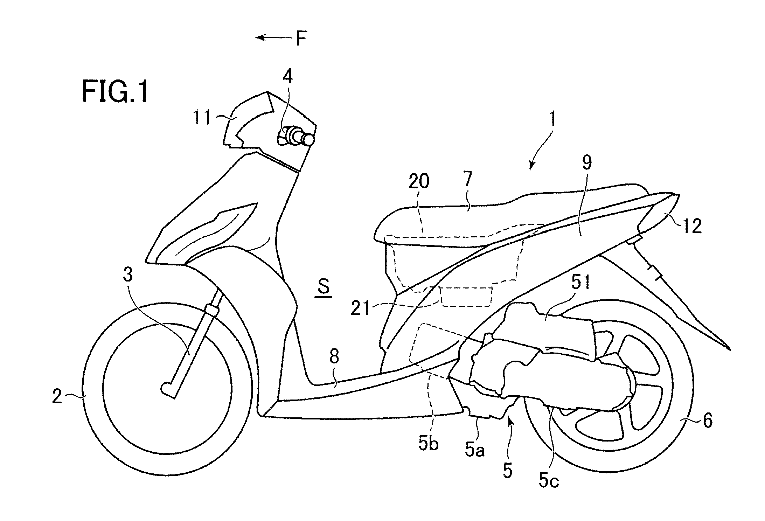

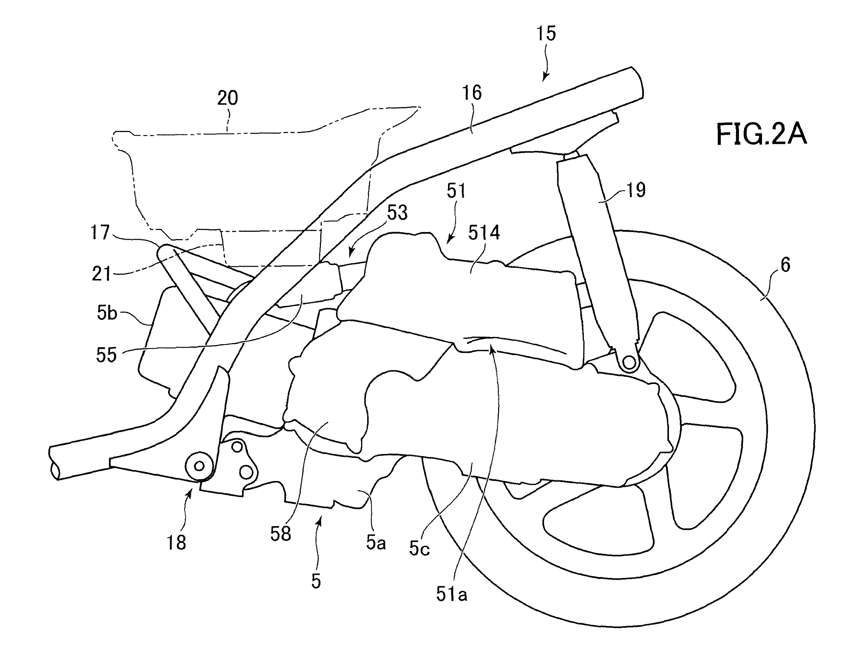

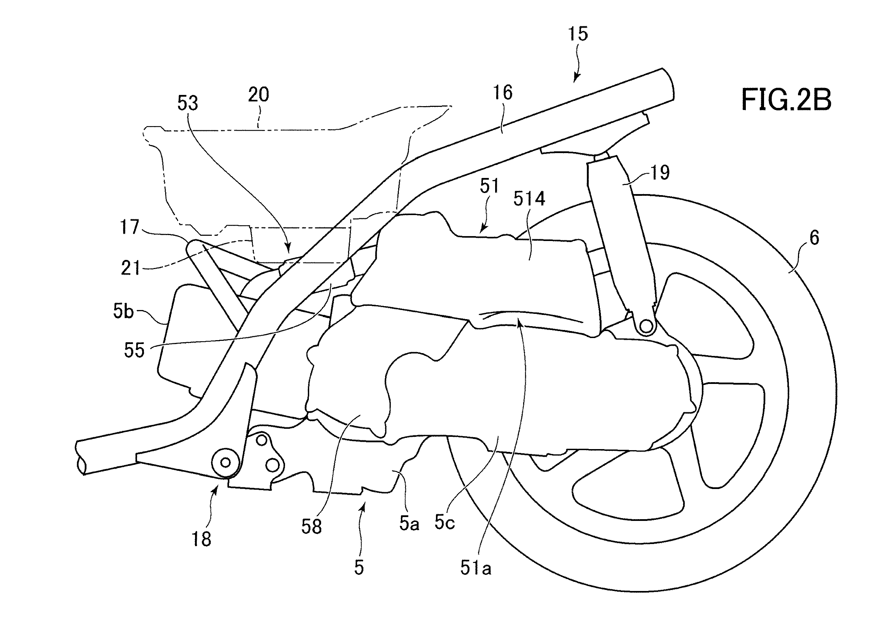

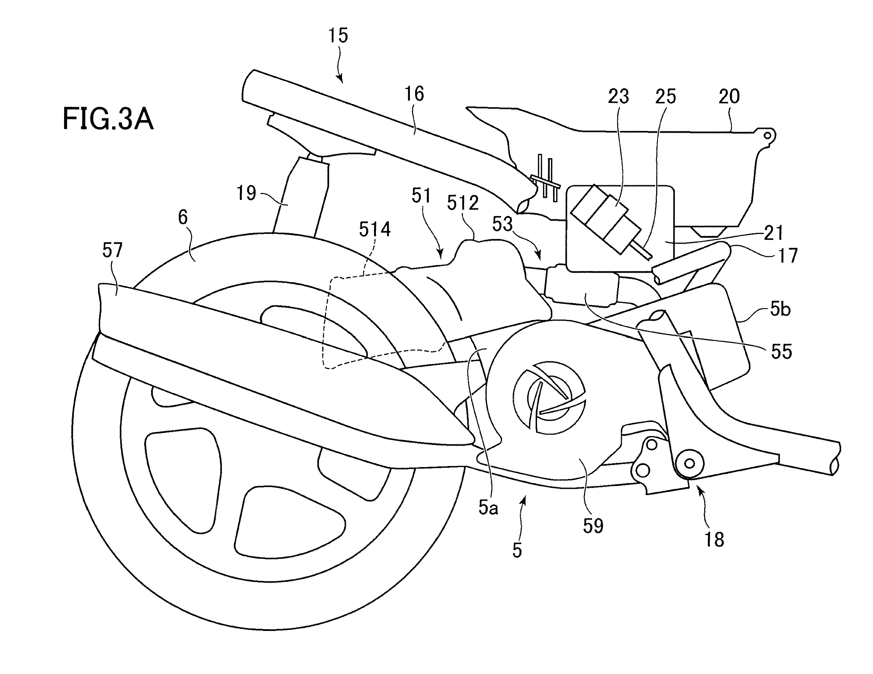

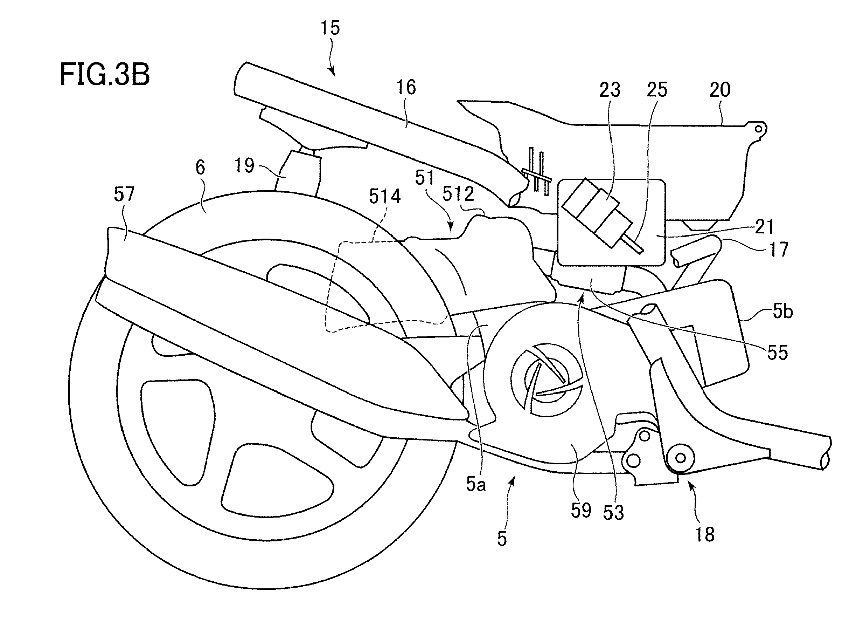

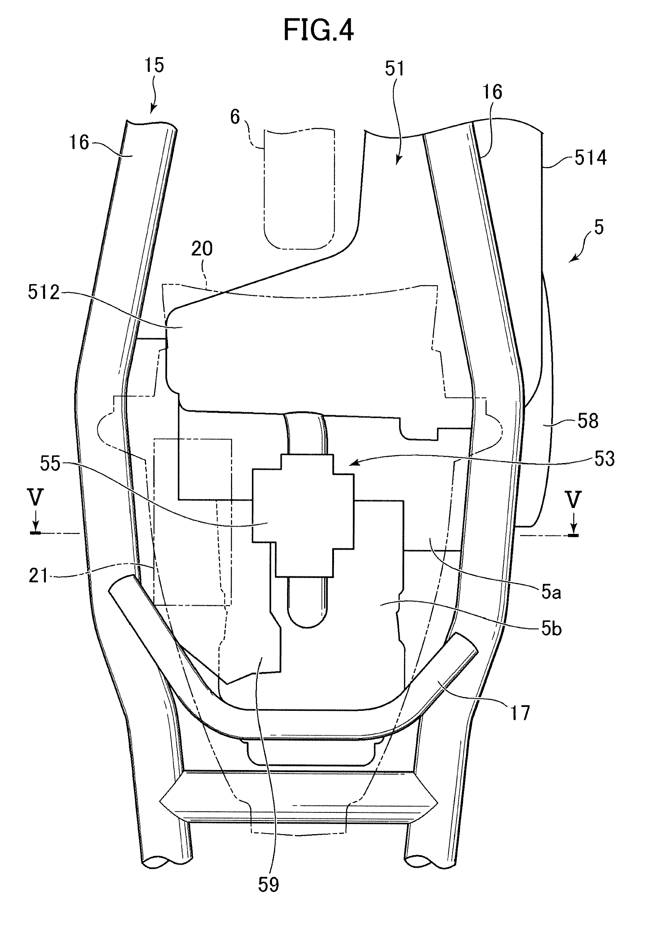

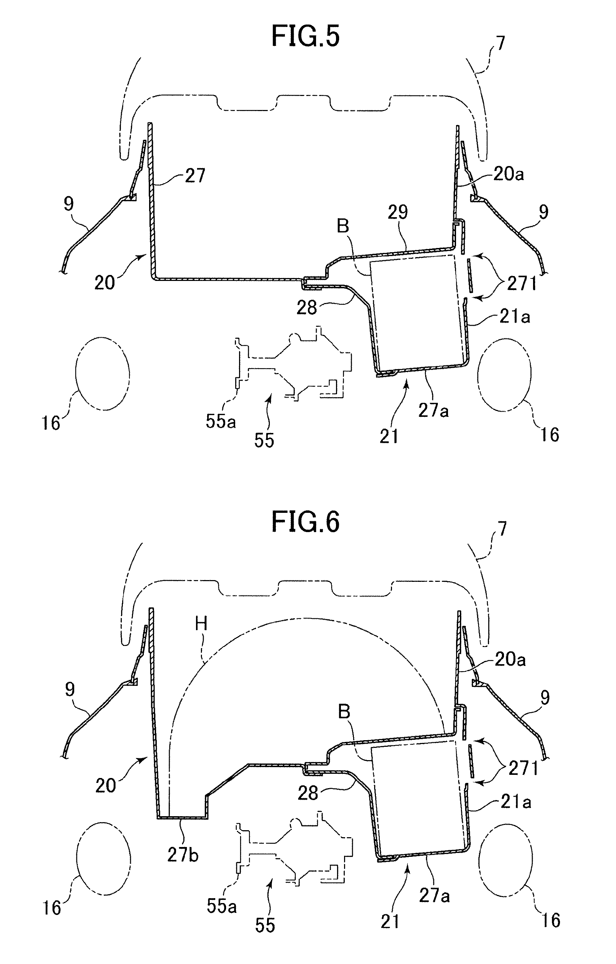

Fig. 1 is a left side view of a two-wheeled motor vehicle 1. Figs. 2A and 2B are left side views of an engine unit 5 and a vehicle body frame 15. Figs. 3A and 3B are right side views of the engine unit 5 and the vehicle body frame 15. Fig. 4 is a plan view of the engine unit 5 and the vehicle body frame 15. Fig. 5 is a cross sectional view of a storage box 20 and a battery case 21. Of these diagrams, Figs. 2A and 3A show the engine unit 5 at a normal position in swinging, while Figs. 2B, 3B, 4, and 5 show the engine unit 5 at the top position in swinging. Note that in Figs. 3A and 3B, a part of the main frame 16 is not shown.

In the description below, the directions forward (in front of, and so forth), rearward (behind, at the back, and so forth), upward (higher, above, and so forth), downward (lower, below, and so forth), leftward, and rightward respectively refer to the directions forward (in front of, and so forth), rearward (behind, at the back, and so forth), upward (higher, above, and so forth), downward (lower, below, and so forth), leftward, and rightward viewed from a driver striding on the seat 7 with his/her face toward the handle 4. The arrow F in Fig. 1 indicates the forward direction.

As shown in Fig. 1, the front wheel 2 of the two-wheeled motor vehicle 1 is supported by the lower end of the front fork 3. The front fork 3 is supported so as to swing left and right by a steering shaft (not shown) supported at the foremost part of the vehicle body frame. A handle 4 is connected to the upper part of the front fork 3. A headlight 11 is provided in front of the handle 4.

At the back part of the two-wheeled motor vehicle 1, the engine unit 5 is placed. At the rear of the engine unit 5, a rear wheel 6 is rotatably supported. The engine unit 5 can swing up and down together with the rear wheel 6 relative to the vehicle body frame. Above the engine unit 5, a seat 7 is placed. A storage box 20 and a battery case 21 are placed above the engine unit 5 below the seat 7.

Side covers 9, placed below the seat 7 in a side view, are placed to the right and left, respectively, of the storage box 20 and the battery case 21. A tail light 12 is placed on the rear end of the side cover 9. There is a space S between the front wheel 2 and the seat 7. A step board 8 is provided under the space S for a rider to put his/her foot on.

As shown in Figs. 2A to 5, the vehicle body frame 15 has a pair of left and right main frames 16 placed to the left and right, respectively, of the engine unit 5 and extending up-rearward. A pivot shaft 18 is provided under the main frame 16, so that the engine unit 5 swings in the up-down direction with the pivot shaft 18 as a pivot point. A suspension 19 is provided bridging the rear end of the main frame 16 and that of the engine unit 5. The vehicle body frame 15 has a cross frame 17 that connects the pair of left and right main frames 16 to each other while passing between the engine unit 5 and the storage box 20.

Note that a case in which the engine unit 5 is positioned at a normal position in swinging corresponds to a case in which no load is applied to the suspension 19, while a case in which the engine unit 5 is positioned at the top position in swinging corresponds to a case in which a load is applied to the suspension 19, which at the time is shrunken to the minimum possible length, that is, a case in which the rear part of the engine unit 5 and that of the main frame 16 are positioned closest to each other.

The engine unit 5 includes a crankcase 5a, a cylinder 5b placed in front of the crankcase 5a, and a transmission case 5c placed beside the crankcase 5a and the rear wheel 6. The engine unit 5 has an air cleaner 51 placed above the crankcase 5a, and an air inlet pipe 53 extending forward from the air cleaner 51 and connected to the cylinder 5b. The engine unit 5 further has a resin cover 58 attached to the front part of the left surface of the transmission case 5c, a resin cover 59 attached to the right surface of the crankcase 5a, and a muffler 57 placed to the right of the rear wheel 6 and extending rearward.

The cylinder 5b is placed inclined such that the axis thereof rises higher as it goes forward in a side view. However, this is not limiting and the axis of the cylinder 5b may be horizontal in a side view. The transmission case 5c stores a transmission mechanism for transmitting rotation of the crank shaft provided to the crankcase 5a via a belt, a chain, or the like to the rear wheel 6.

The air cleaner 51 is formed in a substantially L-shape in a plan view. Specifically, the air cleaner 51 has a middle portion 512 extending in the left-right direction from the middle in the vehicle width direction, and a side portion 514 extending rearward from the left side of the middle portion 512. The middle portion 512 is placed on top of the crankcase 5a in front of the rear wheel 6, and the side portion 514 is placed on top of the transmission case 5c to the left of the rear wheel 6. On a left part of the side portion 514, an air inlet 51a is formed at the middle in the front-rear direction as an opening communicating with the outside. Specifically, the left part of the side portion 514 is formed convex projecting leftward, with the air inlet 51a formed on the bottom surface of the projected portion.

The air inlet pipe 53 is placed at the middle in the vehicle width direction, extending forward from the front surface of the middle portion 512 of the air cleaner 51 and then bent downward to be connected to the top surface of the cylinder 5b. Midway the air inlet pipe 53, a throttle body 55 is provided. The throttle body 55 is placed above the crankcase 5a and the cylinder 5b. The throttle body 55 includes a throttle valve, and is larger in the up-down and left-right directions than other parts of the air inlet pipe 53. The throttle body 55 may include a fuel injection device. However, this is not limiting, and the fuel injection device may be placed on a part of the air inlet pipe 53 other than the throttle body 55. The fuel injection device may be an electrically controlled injector or a carburetor.

The storage box 20 is formed in a substantially box-like shape that becomes narrower as it goes forward, and has a storage space open upward. The storage box 20 is placed between a pair of left and right main frames 16 and supported by these main frames 16. A battery case 21 for storing a battery is placed below the right part of the storage box 20. An ECU 23 for electric connection to the battery stored inside the battery case 21 is mounted on the right side wall of the battery case 21. A harness 25 is connected to the ECU 23. The harness 25 supplies electric power to the engine unit 5, the head light 11, the tail light 12 (see Fig. 1) and so forth. Note that a position for mounting the ECU 23 is not limited to the side wall of the battery case 21.

As shown in Figs. 2B, 3B, 4, and 5, the battery case 21 is designed to have a size and be positioned so as not to contact the engine unit 5 positioned at the top position in swinging. Specifically, the battery case 21 is positioned in the space ensured above the cylinder 5b in front of the air cleaner 51 to the right of the throttle body 55 to the left of the right main frame 16 behind the cross frame 17 with the engine unit 5 positioned at the top position in swinging.

Accordingly, when the engine unit 5 is positioned at the top position in swinging, the battery case 21 is resultantly positioned above the cylinder 5b in front of the air cleaner 51 to the right of the throttle body 55. Further, the battery case 21 is positioned to the left of the right main frame 16 behind the cross frame 17.

Note that as shown in Fig. 4, the throttle body 55 is positioned above the middle part of the cylinder 5b in the vehicle width direction, and the battery case 21 is positioned above the right part of the cylinder 5b in the vehicle width direction. That is, it can be rephrased that the battery case 21 is positioned diagonally right above the cylinder 5b. The battery case 21 is positioned above the right part of the crankcase 5a in the vehicle width direction. The side portion 514 of the air cleaner 51 is placed to the left of the middle portion 512, while the battery case 21 is placed to the right of the throttle body 55. Note that although the battery case 21 is placed to the right of the throttle body 55 in this embodiment, this is not limiting, and the battery case 21 may be placed to the left of the throttle body 55.

As shown in Fig. 5, a throttle pulley 55a for holding a throttle cable (not shown) wound therearound is formed on the left part of the throttle body 55. As such, as the throttle pulley 55a is formed on the left part of the throttle body 55 and the battery case 21 is placed to the right of the throttle body 55, it is possible to ensure a space for placing the battery case 21.

As shown in Figs. 2A and 3A, the battery case 21 is positioned in front of the air cleaner 51 to the right of the throttle body 55 even when the engine unit 5 is positioned at a normal position in swinging. In this case, the range in which the battery case 21 faces the air cleaner 51 in the front-back direction and the throttle body 55 in the left-right direction is shorter in the up-down direction than the corresponding range with the engine unit 5 positioned at the top position.

As shown in Fig. 5, the storage box 20 and the battery case 21 are formed integrally. Specifically, a main body 27 having a dent part 27a formed on the right part of the bottom surface thereof that projects downward more than the other part, a wall member 28 placed beside the dent part 27a, and a roof member 29 placed on top of the dent part 27a are assembled to each other to thereby constitute the storage box 20 and the battery case 21. The storage space of the storage box 20 is formed by the main body 27 and the roof member 29. The storage space of the battery case 21 is defined by the dent part 27a of the main body 27, the wall member 28, and the roof member 29. As described above, the storage space of the storage box 20 and that of the battery case 21 are separated from each other by the roof member 29.

A part of the right side wall of the main body 27 above the position where the roof member 29 is attached is defined as the side wall 20a of the storage box 20, while that below is defined as the side wall 21a of the battery case 21. The side wall 21a of the battery case 21 is positioned more rightward than the side wall 20a of the storage box 20. A hole 271 for mounting the ECU 23 (see Fig. 3B) is formed on the side wall 21a of the battery case 21.

Note that, however, the storage box 20 and the battery case 21 are not limited to the above described. For example, an opening may be formed on the bottom surface of the storage box 20, the battery case 21 may be placed below the opening, and the roof member 29 may be attached so as to close the opening. In this case, the roof member 29 may be attached to either the storage box 20 or the battery case 21.

In the above described embodiment, as the battery case 21 provided below the storage space of the storage box 20 is placed in the space ensured in front of the air cleaner 51 above the cylinder 5b to the right of the throttle body 55, it is possible to prevent the battery from getting dirt and water splashed by the rear wheel 6, and also to increase the front-rear length of the storage space of the storage box 20. Further, as the battery case 21 is placed at the middle of the vehicle in the front-rear direction, it is possible to reduce the length of the harness 25 connected to the engine unit 5, the head light 11, the tail light 12, and the like. In particular, as the engine unit 5 includes many components, such as an ignition plug, sensors, and a stator motor, connected to the battery, provision of the battery case 21 near the engine unit 5 can reduce the length of the harness 25 having a relative large number of wires connected to the engine unit 5.

Further, in this embodiment, as the air inlet 51a is formed on the side portion 514 of the air cleaner 51, a space for the battery case 21 can be readily ensured in front of the air cleaner 51 beside the throttle body 55. Further, as the side portion 514 having the air inlet 51a formed thereon extends rearward, it is possible to increase the capacity of the air cleaner 51.

Further, in this embodiment, as the battery case 21 is positioned more rearward than the cross frame 17, it is possible to place the battery case 21 in the space enclosed by the air cleaner 51, the throttle body 55, the cross frame 17, and the main frame 16 to improve protection of the battery.

Further, in this embodiment, the side wall 21a of the battery case 21 is positioned more rightward than the side wall 20a of the storage box 20, it is possible to increase the capacity of the battery case 21.

Further, in this embodiment, as the storage space of the storage box 20 is separated from that of the battery case 21 by the roof member 29, removing the roof member 29 allows access from the storage space of the storage box 20 to that of the battery case 21.

Although an embodiment of the present invention has been described in the above, the present invention is not limited to the above described embodiment, and obviously, various modifications are possible to a person skilled in the art.

For example, as shown in Fig. 6, the dent part 27b dented downward may be formed on the side of the bottom surface of the storage box 20 opposite from the battery case 21 relative to the throttle body 55. In this case, the dent part 27b is positioned in the space ensured above the cylinder 5b in front of the air cleaner 51 to the left of the throttle body 55 to the right of the left main frame 16 behind the cross frame 17 when the engine unit 5 is positioned at the top position in swinging. With such a dent part 27b provided, the capacity of the storage box 20 can be increased so that a relatively large item, such as a helmet H, can be stored therein on a slant.

## Claims

1. A two-wheeled motor vehicle (1), comprising:
a vehicle body frame (15);
a pivot shaft (18) supported by the vehicle body frame (15);
an engine unit (5) capable of rocking in an up-down direction with the pivot shaft (18) as a fulcrum;
a storage box (20) placed above the engine unit (5);
a battery case (21) placed below a storage space of the storage box (20) and configured to store a battery;
a rear wheel (6) supported so as to rotate at a rear of the engine unit (5); and
a seat (7) placed above the storage box (20); wherein
the engine unit (5) includesa crank case (5a), a cylinder (5b) placed in front of the crank case (5a), an air cleaner (51) placed above the crank case (5a), an air inlet pipe (53) extending forward from the air cleaner (51) to be connected to the cylinder (5b), and
having a throttle body (55) placed above the cylinder (5b), and atransmission case (5c) placed beside the crank case (5a) and the rear wheel (6),
**characterized in that**
the air cleaner (51) is formed in a substantially L-shape in plan view,
the air cleaner(51) has a middle portion (512) extending in a left-right direction from the middle in a vehicle width direction, and a side portion (514) extending rearward from a lateral side of the middle portion (512), wherein the middle portion (512) is placed on the top of the crank case (5a) in front of the rear wheel (6) and the side portion (514) is placed on the top of the transmission case (5c) on a lateral side of the rear wheel (6), and
the battery case (21) is positioned in front of the air cleaner (51) and beside the throttle body (55) at least when the engine unit (5) is positioned at a top position in rocking.

2. The two-wheeled motor vehicle(1) according to claim 1, wherein
the cylinder (5b) has an axis thereof horizontal or rising as it goes forward in a side view.

3. The two-wheeled motor vehicle(1) according to claim 1 or 2, wherein
an air inlet (51a) is formed on the side portion (514).

4. The two-wheeled motor vehicle(1) according to any one of claims 1 to 3, wherein
the vehicle body frame (15) includes
a pair of main frames (16) placed to respective both sides of the engine unit (5), and
a cross frame (17) connecting the pair of main frames (16) to each other.

5. The two-wheeled motor vehicle (1) according to claims 4, wherein
the battery case (21) is positioned more rearward than the cross frame (17).

6. The two-wheeled motor vehicle (1) according to any one of claims 1 to 5, further comprising a roof member (29) for separating the storage space of the storage box (20)
and a storage space of the battery case (21).

7. The two-wheeled motor vehicle (1) according to any one of claims 1 to 6, wherein a dent part (27b) dented downward is formed on a bottom surface of the storage box (20) on a side opposite from the battery case (21) relative to the throttle body (55).

8. The two-wheeled motor vehicle (1) according to any one of claims 1 to 7, wherein the battery case (21) includes a side wall (21a) positioned more sideward than a side wall (20a) of the storage box (20).

## Patentansprüche

1. Zweirädriges Motorfahrzeug (1), das umfasst:
einen Fahrzeug-Karosserierahmen (15);
eine Schwenkwelle (18), die über den Fahrzeug-Karosserierahmen (15) gelagert ist;
eine Motoreinheit (5), die mit der Schwenkwelle (18) als einem Drehpunkt in einer vertikalen Richtung schwingen kann;
einen Aufbewahrungskasten (20), der oberhalb der Motoreinheit (5) angeordnet ist;
ein Batteriegehäuse (21), das unterhalb eines Aufbewahrungsraums des Aufbewahrungskastens (20) angeordnet und zum Aufbewahren einer Batterie eingerichtet ist;
ein Hinterrad (6), das so gelagert ist, dass es sich an einer Rückseite der Motoreinheit (5) dreht; und
einen Sitz (7), der oberhalb des Aufbewahrungskastens (20) angeordnet ist; wobei die Motoreinheit (5) ein Kurbelgehäuse (5a), einen Zylinder (5b), der vor dem Kurbelgehäuse (5a) angeordnet ist, einen Luftfilter (51), der oberhalb des Kurbelgehäuses (5a) angeordnet ist, sowie ein Lufteinlassrohr (53), das sich von dem Luftfilter (51) nach vorn erstreckt, mit dem Zylinder (5) verbunden ist und ein Drosselklappengehäuse (55) aufweist, das oberhalb des Zylinders (5b) angeordnet ist, sowie ein Getriebegehäuse (5c) enthält, das neben dem Kurbelgehäuse (5a) und dem Hinterrad (6) angeordnet ist,
**dadurch gekennzeichnet,**
**dass** der Luftfilter (51) in Draufsicht im Wesentlichen L-förmig ist,
der Luftfilter (51) einen mittleren Abschnitt (512), der sich in einer Links-Rechts-Richtung von der Mitte in einer Fahrzeug-Breitenrichtung erstreckt, sowie einen seitlichen Abschnitt (514) aufweist, der sich von einer Längsseite des mittleren Abschnitts (512) aus nach hinten erstreckt, wobei der mittlere Abschnitt (512) an der Oberseite des Kurbelgehäuses (5a) vor dem Hinterrad (6) angeordnet ist und der seitliche Abschnitt (514) an der Oberseite des Getriebegehäuses (5c) an einer Längsseite des Hinterrades (6) angeordnet ist, und
sich das Batteriegehäuse (21), zumindest wenn sich die Motoreinheit (5) beim Schwingen an einer oberen Position befindet, vor dem Luftfilter (51) und neben dem Drosselklappengehäuse (55) befindet.

2. Zweirädriges Motorfahrzeug (1) nach Anspruch 1, wobei
eine Achse des Zylinders (5b), in Seitenansicht, horizontal verläuft oder nach vorn ansteigt.

3. Zweirädriges Motorfahrzeug (1) nach Anspruch 1 oder 2, wobei
ein Lufteinlass (51 a) an dem seitlichen Abschnitt (514) ausgebildet ist.

4. Zweirädriges Motorfahrzeug (1) nach einem der Ansprüche 1 bis 3, wobei der Fahrzeug-Karosserierahmen (15) enthält:
ein Paar Hauptrahmen (16), die jeweils an beiden Seiten der Motoreinheit (5) angeordnet sind, und
einen Querrahmen (17), der die paarigen Hauptrahmen (16) miteinander verbindet.

5. Zweirädriges Motorfahrzeug (1) nach Anspruch 4, wobei
das Batteriegehäuse (21) weiter hinten angeordnet ist als der Querrahmen (17).

6. Zweirädriges Motorfahrzeug (1) nach einem der Ansprüche 1 bis 5, das des Weiteren ein Abdeckungselement (29) umfasst, das den Aufbewahrungsraum des Aufbewahrungskastens (20) und einen Aufbewahrungsraum des Batteriegehäuses (21) trennt.

7. Zweirädriges Motorfahrzeug (1) nach einem der Ansprüche 1 bis 6, wobei ein Vertiefungsteil (27a), der nach unten vertieft ist, an einer Bodenfläche des Aufbewahrungskastens (20) an einer dem Batteriegehäuse (21) relativ zu dem Drosselklappengehäuse (55) gegenüberliegenden Seite ausgebildet ist.

8. Zweirädriges Motorfahrzeug (1) nach einem der Ansprüche 1 bis 7, wobei das Batteriegehäuse (21) eine Seitenwand (21 a) enthält, die weiter seitlich angeordnet ist als eine Seitenwand (20a) des Aufbewahrungskastens (20).

## Revendications

1. Véhicule deux roues à moteur (1), comprenant :
- un corps de châssis de véhicule (15) ;
- un arbre de pivot (18) supporté par le corps de châssis de véhicule (15) ;
- une unité de moteur (5) susceptible de se balancer dans une direction vers le haut ou vers le bas avec l'arbre de pivot (18) comme pivot ;
- une boite de stockage (20) placée au-dessus de l'unité de moteur (5);
- une enveloppe de batterie (21) placée au-dessous d'un espace de stockage de la boite de stockage (20) et configurée pour loger une batterie ;
- une roue arrière (6) supportée de façon rotative à un arrière de l'unité de moteur (5) ; et
- un siège (7) placé au-dessus de la boite de stockage (20) ; dans lequel :
- l'unité de moteur (5) inclut une enveloppe de vilebrequin (5a), un cylindre (5b) placé devant l'enveloppe de vilebrequin (5a), un filtre à air (51) placé au-dessus de l'enveloppe de vilebrequin (5a), un tuyau d'admission d'air (53) s'étendant vers l'avant à partir du filtre à air (51) pour être relié au cylindre (5b) et comportant un corps de papillon de gaz (55) placé au-dessus du cylindre (5b), et un carter de transmission (5c) placé au côté de l'enveloppe de vilebrequin (5b) et de la roue arrière (6),
- **caractérisé en ce que** :
- le filtre à air (51) est conformé sensiblement en forme de L en vue en plan ;
- le filtre à air (51) a une portion médiane (513) s'étendant dans une direction vers la gauche ou vers la droite à partir d'un milieu dans une direction de la largeur du véhicule et une portion latérale (514) s'étendant vers l'arrière à partir d'un côté latéral de la portion médiane (512), dans lequel la portion médiane (512) est placée sur le sommet de l'enveloppe de vilebrequin (5a) devant la roue arrière (6) et la portion latérale (514) est placée sur le sommet du carter de transmission (5c) sur le côté latéral de la roue arrière (6) ; et
- l'enveloppe de batterie (21) est positionnée devant le filtre à air (51) et au côté du corps de papillon de gaz (55) au moins lorsque l'unité de moteur (5) est positionnée en balancement.

2. Véhicule deux roues à moteur (1) selon la revendication 1, dans lequel :
- le cylindre 5b) a un son axe horizontal ou s'élevant à mesure qu'il se déplace vers l'avant en vue latérale.

3. Véhicule deux roues à moteur (1) selon les revendications 1 ou 2, dans lequel :
- l'admission d'air (51a) est formée sur la portion latérale (514).

4. Véhicule deux roues à moteur (1) selon l'une quelconque des revendications 1 à 3, dans lequel :
- le corps de châssis de véhicule (15) inclut :
- une paire de structures principale (16) placées sur les deux côtés respectifs de l'unité de moteur (5) et une structure en croix (17) reliant la paire de structures principales (16) l'une à l'autre.

5. Véhicule deux roues à moteur (1) selon la revendication 4, dans lequel :
- l'enveloppe de batterie (21) est positionnée davantage en arrière que la structure en croix (17).

6. Véhicule deux roues à moteur (1) selon l'une quelconque des revendications 1 à 5, comprenant en outre un élément de toit (29) pour séparer l'espace de stockage de la boite de stockage (20) et un espace de stockage de l'enveloppe de batterie (21).

7. Véhicule deux roues à moteur (1) selon l'une quelconque des revendications 1 à 6, dans lequel une partie dentée (27b) dentée vers le bas est formée sur une surface de fond de la boite de stockage (20) sur une côté opposé à l'enveloppe de batterie (21) relativement au corps de papillon de gaz (55).

8. Véhicule deux roues à moteur (1) selon l'une quelconque des revendications 1 à 7, dans lequel l'enveloppe de batterie (21) inclut une paroi latérale (21a) positionnée davantage vers le côté qu'une paroi latérale (20a) de la boite de stockage (20).
